# EUROPÄISCHE PATENTANMELDUNG

(11) **EP 1 302 899 A2**
(43) Veröffentlichungstag der Anmeldung: **16.04.2003**
(21) Anmeldenummer: 02017911.5
(22) Anmeldetag: 09.08.2002
(51) Int. Cl.: G06T 5/50

(54) **Vorrichtung und Verfahren zur Verarbeitung von Digitalbildern**

(30) Priorität: 11.08.2001 DE 10139708
(71) Anmelder: Philips Corporate Intellectual Property GmbH, 20099 Hamburg (DE); Koninklijke Philips Electronics N.V., 5621 BA Eindhoven (NL)
(72) Erfinder: Schmitz, Georg, Dr., c/oPhilips Corporate, 52008 Aachen (DE); Stegehuis, Herman, c/oPhilips Corporate, 52008 Aachen (DE); Rongen, Peter, c/oPhilips Corporate, 52008 Aachen (DE); Aach, Til, Dr., c/oPhilips Corporate, 52008 Aachen (DE)
(74) Vertreter: Volmer, Georg, Dipl.-Ing.

(57) **Zusammenfassung**

Die Erfindung betrifft ein Verfahren und eine Vorrichtung zur verbesserten Darstellung kleiner dunkler Strukturen wie insbesondere kardialer Gefäße in digitalen Röntgenbildern. Ein Livebild (S) wird dabei zunächst einer Multiskalenzerlegung unterworfen, wobei durch mehrfache Anwendungen von Tiefpassfilterungen mit anschließenden Auflösungsreduzierungen (RED) einerseits sowie Auflösungserhöhungen mit anschließenden Tiefpassfilterungen (EXP) andererseits Detailbilder (D1, D2, D3, D4) verschiedener Auflösung gewonnen werden. Gemäß einer ersten Variante des Verfahrens wird eine den nicht interessierenden Bildhintergrund repräsentierende Maske (M) vom Detailbild (D4) der geringsten Auflösungsstufe subtrahiert. Hierdurch wird sichergestellt, dass die Subtraktion nur noch entsprechend grobe Strukturen erfasst, deren Abmessungen größer als die erwarteten Bildbewegungen sind. Eine zusätzliche Verbesserung kann erreicht werden, indem eine Bewegungsschätzung (MOT EST) und Bewegungskompensation
(MOT COMP) auf die Maske (M) und das Detailbild (D4) geringster Auflösungsstufe angewendet wird. Die Detailbilder (D1 - D4) können vor ihrer erneuten Zusammensetzung zum Gesamtbild (G) mit Faktoren (c₂) multipliziert werden. Vorzugsweise werden dabei asymmetrische Verstärkungsfunktionen verwendet, wobei negative Kontrastwerte, die kleinen dunklen Strukturen entsprechen, verstärkt und positive Kontrastwerte unterdrückt werden können.

## Beschreibung

Die Erfindung betrifft ein Verfahren zur Verarbeitung von Digitalbildern, insbesondere von digitalisierten Röntgenbildern der kardialen Gefäße. Ferner betrifft sie eine Vorrichtung zur Durchführung dieses Verfahrens.

In verschiedenen Anwendungen von bildgebenden Verfahren tritt das Problem auf, dass kleine, dunkle Strukturen vor einem nicht interessierenden Hintergrund verstärkt werden sollen. Als Beispiel hierfür wird nachfolgend stellvertretend die Röntgendiagnose von Blutgefäßen, insbesondere von Gefäßen des Herzens betrachtet. Bei der diagnostischen Darstellung von Blutgefäßen wird häufig ein für Röntgenstrahlen undurchlässiges Kontrastmittel injiziert, so dass die Gefäße, durch welche das Kontrastmittel geleitet wird, auf dem Röntgenbild als dunkle, röhrenartige Strukturen gegenüber dem helleren Hintergrund von Knochen, Gewebe und dergleichen erscheinen. Um die Erkennbarkeit der Gefäße weiter zu steigern, wird das aufgenommene Röntgenbild bei der sogenannten digitalen Subtraktionsangiographie (DSA) durch Subtraktion einer Maske beziehungsweise eines Maskenbildes vom aktuellen Röntgenbild nachbearbeitet, wodurch der Hintergrundkontrast, nicht jedoch der Gefäßkontrast reduziert wird. Die Erzeugung der Maskenbilder ist jedoch insbesondere bei der Herzdarstellung aufgrund der Eigenbewegung des Patienten und aufgrund des Herzschlages sehr schwierig.

Ein Verfahren und eine Vorrichtung zur Kontrastverstärkung von digitalen Bildern ist aus der EP 0 527 525 B1 bekannt. Bei diesem Verfahren wird das Digitalbild zunächst in N (N = 1, 2, ...) Detailbilder unterschiedlicher Auflösungsstufe beziehungsweise Ortsfrequenz zerlegt ("Multiskalenzerlegung"), wobei die n-ten Detailbilder (n < N) den Bildkontrast auf ihrer Auflösungsstufe wiedergeben, d.h. näherungsweise die Differenz zum mittleren Grauwert bei der jeweiligen Auflösung. Das letzte, N-te Detailbild oder Restbild gibt eine Näherung des Originalbildes unter Auslassung aller in den n-ten Detailbildern enthaltenen Variationen wieder. Nach der Multiskalenzerlegung wird mindestens eines der Detailbilder mit einer nichtlinearen, monoton wachsenden, ungeraden Konvertierungsfunktion (Kennlinie) f modifiziert, deren Steigung mit Abstand vom Nullpunkt allmählich abnimmt, was der Multiplikation der Bildpunktwerte mit einer symmetrischen Verstärkungsfunktion V entspricht, die beim Bildpunktwert Null ein Maximum > 1 aufweist. Der Zusammenhang zwischen den ursprünglichen Bildpunktwerten x und den modifizierten Bildpunktwerten y wird dabei wie folgt durch die Konvertierungsfunktion bzw. Kennlinie f einerseits und die Verstärkungsfunktion V andererseits ausgedrückt: y = f(x) = V(x)·x. Durch die genannte Modifikation werden schwache Kontraste - sowohl dunkle Strukturen vor hellem Hintergrund als auch helle Strukturen vor dunklem Hintergrund - verstärkt.

Angesichts diese Standes der Technik war es eine Aufgabe der vorliegenden Erfindung, eine Vorrichtung und ein Verfahren bereitzustellen, welche eine verbesserte Darstellung von Bilddetails wie insbesondere von kardialen Gefäßen gewährleisten.

Diese Aufgabe wird durch ein Verfahren mit den Merkmalen des Anspruchs 1 sowie eine Vorrichtung mit den Merkmalen des Anspruchs 10 gelöst. Vorteilhafte Ausgestaltungen sind in den Unteransprüchen enthalten.

Das erfindungsgemäße Verfahren zur Verarbeitung von Digitalbildern wie insbesondere von digitalisierten Röntgenbildern der kardialen Gefäße enthält die folgenden Schritte:
- Zerlegung des Digitalbildes in N Detailbilder unterschiedlicher Ortsfrequenz und gegebenenfalls Bandbreite, wobei N eine natürliche Zahl N = 1, 2, ... ist;
- Modifikation mindestens eines der so erhaltenen Detailbilder, so dass kleine Strukturen hohen Absorptionsvermögens, die sich im Digitalbild dunkel darstellen, verstärkt und/oder sonstige Strukturen geschwächt werden; und
- Zusammensetzung der Detailbilder nach ihrer eventuellen Modifikation zu einem Gesamtbild.

Das vorgeschlagene Verfahren nimmt zunächst eine Multiskalenzerlegung des Digitalbildes vor, wodurch die Detailbilder mit unterschiedlicher Auflösungsstufe beziehungsweise Ortsfrequenz und gegebenenfalls unterschiedlicher Bandbreite erhalten werden. Sodann wird eine Verstärkung der interessierenden Strukturen beziehungsweise eine Abschwächung der nicht interessierenden Strukturen an den Detailbildern vorgenommen, was vom Rechenaufwand her in der Regel erheblich einfacher ist als eine Bearbeitung des ursprünglichen Digitalbildes. Das Verfahren kann hierdurch in Echtzeit an Aufnahmen durchgeführt werden. Ferner kann durch die Auswahl des modifizierten Detailbildes festgelegt werden, welche Ortsfrequenz und/oder Bandbreite des ursprünglichen Bildes bearbeitet werden soll.

Gemäß einer ersten Ausgestaltung des Verfahrens wird speziell das N-te Detailbild, welches definitionsgemäß dasjenige Detailbild der gröbsten Auflösung sein soll und bei bestimmten Varianten der Multiskalenzerlegung auch als "Restbild" bezeichnet wird, durch Subtraktion einer Maske der gleichen groben Auflösungsstufe modifiziert. Bei der Nachbearbeitung von Aufnahmen kardialer Gefäße durch Subtraktion einer den nicht interessierenden Hintergrund repräsentierenden Maske besteht das Problem, dass es aufgrund einer Bewegung des Patienten beziehungsweise des Herzens zu einer mangelnden Übereinstimmung zwischen dem Hintergrund des aktuellen Bildes und der subtrahierten Maske kommen kann. Um die dadurch auftretenden Artefakte zu minimieren, werden erfindungsgemäß nur solche Strukturen in der zu subtrahierenden Maske berücksichtigt, deren Ausdehnung größer ist als die aufgrund der Bewegung auftretende Varianz. Dies geschieht wie vorgeschlagen am einfachsten dadurch, dass lediglich im N-ten Detailbild (Restbild) der gröbsten Auflösungsstufe die Subtraktion einer Maske derselben groben Auflösungsstufe erfolgt.

Eine genauere Berücksichtigung von Bewegungsartefakten kann erfolgen, indem auf die verwendete Maske vor ihrer Subtraktion von N-ten Detailbild (Restbild) eine Bewegungsschätzung und Bewegungskompensation angewendet wird. Die Maske wird somit den Bewegungen des aktuellen Bildhintergrundes so gut wie möglich nachgeführt und angepasst, so dass die Fehler aufgrund einer Bewegung des dargestellten Objektes minimiert werden.

Gemäß einer bevorzugten Weiterbildung des Verfahrens wird die zur Subtraktion verwendete Maske unter Bildung des pixelweisen zeitlichen Maximalwertes aus dynamisch gewonnenen Digitalbildern berechnet. Ein solches Vorgehen ist bei der kardialen Diagnose unter Verwendung eines Kontrastmittels vorteilhaft, wo ein zu einem Blutgefäß gehörendes Pixel durch das vorübergehende Auftreten des Kontrastmittels eine Verdunkelung erfährt. Wenn daher von jedem Pixel der zeitliche Maximalwert seines Grauwertes gespeichert wird, wird näherungsweise eine Aufnahme ohne die Wirkung des Kontrastmittels erzeugt. Die Anfertigung einer separaten Aufnahme ohne Kontrastmittel kann hierdurch erspart werden. Details dieses Verfahrens sind in der EP 0 200 262 B1 zu finden.

Gemäß einer anderen Weiterbildung des Verfahrens wird die verwendete Maske durch eine sukzessive N-fache Tiefpassfilterung mit anschließender Auflösungsreduktion erzeugt. Bei der räumlichen Tiefpassfilterung werden hohe Ortsfrequenzen, das heißt kleine Strukturen, unterdrückt. Bei der Auflösungsreduktion wird die Anzahl der Bildpunkte, mit denen das Gesamtbild wiedergegeben wird, vermindert. Durch die genannten Verarbeitungsschritte kann eine Maske, die von dem ursprünglichen Digitalbild mit der ursprünglichen Bandbreite und Auflösung ausgeht, an die Bandbreite und Auflösungsstufe des N-ten Detailbildes (Restbildes) angepasst werden.

Für die Erzeugung der Detailbilder gibt es grundsätzlich verschiedene Möglichkeiten. Gemäß einer bevorzugten Ausgestaltung, die auch als Laplace-Pyramide bezeichnet wird, wird das n-te Detailbild (n<N) erhalten durch Subtraktion desjenigen Zwischenbildes, das durch sukzessive n-fache Tiefpassfilterung mit anschließender Auflösungsreduzierung, durch eine die letzte Auflösungsreduzierung umkehrende Auflösungserhöhung sowie eine abschließende Tiefpassfilterung aus dem Originalbild gewonnen wurde, von demjenigen Zwischenbild, das durch sukzessive (n-1)-fache Tiefpassfilterung mit anschließender Auflösungsreduzierung aus dem Originalbild gewonnen wurde. Das N-te Detailbild oder sogenannte Restbild wird vorzugsweise erhalten durch sukzessive (N-1)-fache Tiefpassfilterung mit anschließender Auflösungsreduzierung. Die n-ten Detailbilder (n<N) enthalten somit den Bildkontrast auf ihrer Auflösungsstufe, d.h. näherungsweise die Differenz zum mittleren Grauwert bei der jeweiligen Auflösung. Das N-te Detailbild oder Restbild gibt eine Näherung des Originalbildes unter Auslassung aller in den n-ten Detailbildern enthaltenen Variationen wieder. Das Zusammensetzen des Gesamtbildes erfolgt schließlich vorzugsweise sukzessive für n = N, ... 2 durch Berechnung eines (n-1)-ten Zwischenbildes als Summe des (n-1)-ten modifizierten Detailbildes und des durch Auflösungserhöhung mit anschließender Tiefpassfilterung umgewandelten n-ten Zwischenbildes, wobei das N-te Zwischenbild definitionsgemäß dem modifizierten N-ten Detailbild und das erste Zwischenbild definitionsgemäß dem gesuchten Gesamtbild entspricht. Einzelheiten eines solchen Verfahrens sind zum Beispiel in der EP 0 527 525 B1 zu finden.

Bei einer Multiskalenzerlegung der zuletzt erläuterten oder einer verwandten Art kann gemäß einer anderen Ausgestaltung des erfindungsgemäßen Verfahrens das n-te Detailbild (n = 1, ..., N-1) modifiziert werden durch Anwendung einer asymmetrischen Verstärkungsfunktion, welche in einem negativen Intervall [-b,-a] größer als in dem korrespondierenden positiven Intervall [a,b] ist. Dabei sollen a und b reelle, nicht-negative Zahlen sein (a,b ∈ [0,∞]) mit a < b. Ferner ist die Verstärkungsfunktion vorzugsweise monoton abnehmend, nichtlinear und für negative Bildpunktwerte größer als 1. Negative Bildpunktwerte in den Detailbildern entsprechen kleinen dunklen Strukturen vor hellem Hintergrund. Die genannte Verstärkungsfunktion ist somit insbesondere geeignet, die feinen Strukturen von Blutgefäßen gegenüber sonstigen Strukturen zu verstärken.

Die oben erläuterten zwei Varianten des erfindungsgemäßen Verfahrens, das heißt die Subtraktion einer Maske vom Restbild (N-ten Detailbild) sowie die Modifikation der n-ten Detailbilder mit einer monoton fallenden Verstärkungsfunktion der beschriebenen Art, werden vorzugsweise gleichzeitig angewendet, um die Vorteile beider Methoden zu erzielen. Da die Modifikation der n-ten Detailbilder keine spezielle Berücksichtigung von Bewegungseffekten beinhaltet, wird die Gewichtung, mit welcher die beiden Methoden relativ zueinander eingesetzt werden, vorzugsweise in Abhängigkeit von der festgestellten Bewegung des Gegenstandes des Digitalbildes variiert. Insbesondere kann bei einer festgestellten mittleren (nicht zu großen) Bewegung des Gegenstandes des Digitalbildes der Anteil der Subtraktion einer Maske stärker gewichtet werden als die Verarbeitung durch Modifikation der n-ten Detailbilder.

Sofern das erfindungsgemäße Verfahren die Feststellung einer Bewegung beinhaltet, erfolgt diese vorzugsweise durch Detektion von Änderungen zwischen der verwendeten Maske und dem Restbild (N-ten Detailbild) gröbster Auflösung. Durch die Beschränkung auf ein Bild grober Auflösung kann eine derartige Detektion verhältnismäßig schnell und damit in Echtzeit durchgeführt werden. Ferner ist automatisch sichergestellt, dass nur Bewegungen entsprechender Größe berücksichtigt werden.

Gemäß einer anderen Weiterbildung des Verfahrens wird die Differenz zwischen einem zeitlich späteren und einem zeitlich früheren Digitalbild gebildet. An den Stellen, an denen das Differenzbild die Bewegung einer dunklen Struktur vor hellem Hintergrund anzeigt, wird sodann die Verstärkungsfunktion gespreizt. Spreizen der Verstärkungsfunktion soll dabei bedeuten, dass ihre Extrema weiter auseinandergezogen werden. Insbesondere kann die Verstärkungsfunktion bei Werten > 1 mit einem Faktor > 1 und bei Werten < 1 mit einem Faktor < 1 multipliziert werden. Alternativ könnte die Verstärkungsfunktion auch an jeder Stelle quadriert werden. Um die Auswirkungen des genannten Verfahrens zu erläutern, sei angenommen, dass das Differenzbild durch Subtraktion eines Bildes Bₜ₋₁ zur Zeit (t-1) von einem Bild Bₜ zur Zeit t gewonnen wird. Dunkle bewegte Strukturen vor hellem Hintergrund zeichnen sich in dem Differenzbild durch negative Werte am neuen Aufenthaltsort und positive Werte am alten Aufenthaltsort aus. Unter der Annahme, dass sich vornehmlich die interessierenden Strukturen wie z.B. Herzgefäße bewegen, kann dann die Bildmodifikation in den Bereichen festgestellter Bewegung (negativer Differenzwerte) intensiviert werden, was mathematisch durch das Spreizen der Verstärkungsfunktion an diesen Stellen erfolgt. Auf diese Weise können Bewegungen einfach detektiert und zur Verbesserung der Darstellung ausgenutzt werden.

Die Erfindung betrifft schließlich auch eine Vorrichtung zur Bildverarbeitung von Röntgenbildern, insbesondere von Aufnahmen der kardialen Gefäße, welche einen Röntgendetektor zur Erzeugung von digitalisierten Röntgenbildern sowie eine Datenverarbeitungseinheit zur Verarbeitung der gewonnenen Digitalbilder enthält. Die Datenverarbeitungseinheit ist dabei so eingerichtet, dass sie ein Verfahren der oben erläuterten Art ausführen kann. Das heißt, dass sie insbesondere eine Multiskalenzerlegung des Digitalbildes vornehmen, die gewonnenen Detailbilder erfindungsgemäß modifizieren, und schließlich die modifizierten Detailbilder wieder zu einem Gesamtbild zusammensetzen kann.

Im Folgenden wird die Erfindung mit Hilfe der Figuren beispielhaft erläutert. Es zeigt:
- Fig. 1: schematisch die Komponenten eines Röntgendurchleuchtungssystems;
- Fig. 2: eine erste Ausgestaltung der erfindungsgemäßen Bildverarbeitung mit einer Multiskalenzerlegung des Bildes und einer Maskensubtraktion;
- Fig. 3: eine zweite Ausgestaltung als Variante des Verfahrens nach Figur 2, wobei zusätzlich eine Bewegungsschätzung und -kompensation erfolgt;
- Fig. 4: eine dritte Ausgestaltung der erfindungsgemäßen Bildverarbeitung mit einer Multiskalenzerlegung und einer Modifikation der Detailbilder;
- Fig. 5: ein vereinfachtes Schema der Bildverarbeitung nach Figur 4 mit einer Darstellung beispielhafter Bilder in den verschiedenen Verarbeitungsstufen;
- Fig. 6: zwei Varianten der in dem Verfahren nach Fig. 4 verwendeten Verstärkungsfunktion.

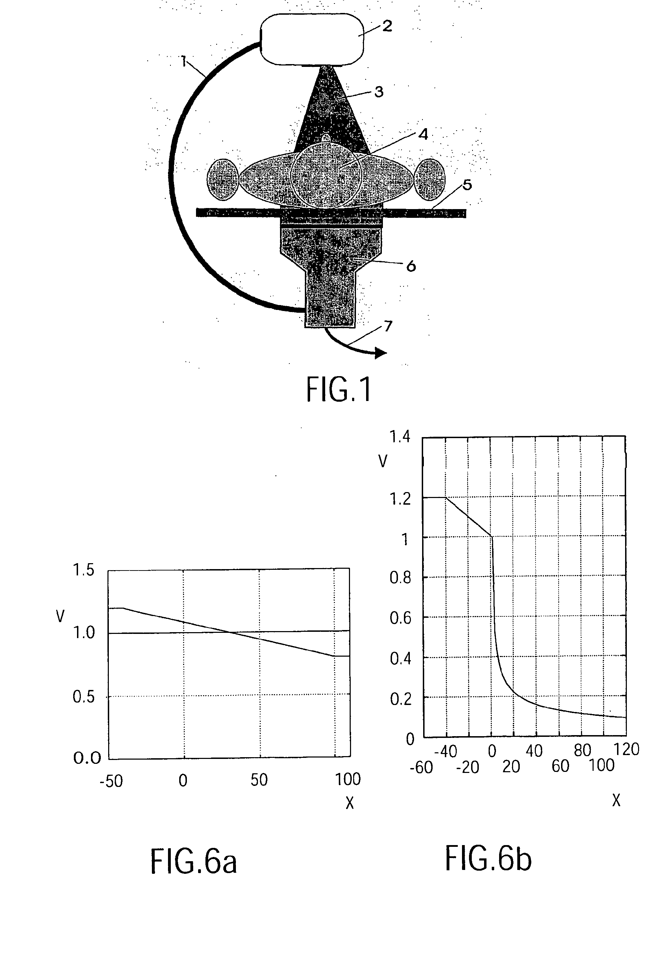

Das erfindungsgemäße Verfahren ist besonders geeignet zum Einsatz in bildgebenden Röntgensystemen wie der Fluoroskopie und der Durchleuchtung, die in der Lage sind, "live" Röntgenbilder zu geben. Wie in Figur 1 dargestellt ist, wird bei solchen Verfahren ein auf einem Tisch 5 liegender Patient 4 einer Röntgenstrahlung 3 ausgesetzt, die von einer an einer Halterung 1 befestigten Röntgenstrahlungsquelle 2 ausgesendet wird. Die Röntgenstrahlung 3 wird bei der Passage durch den Patienten je nach Gewebestrukturen verschieden stark absorbiert und unterhalb des Patienten durch eine geeignete Vorrichtung 6, zum Beispiel durch eine Kette aus einem Bildverstärker und einer Kamera oder durch einen flachen dynamischen Röntgendetektor (FDXD), detektiert. Das so gewonnene Signal wird dann in eine Folge digitaler Bilder 7 zerlegt, die an eine Bildverarbeitungseinheit (nicht dargestellt) weitergeleitet werden. Dort können sie bearbeitet und gegebenenfalls auf einem Monitor dargestellt werden.

Wenn mit einer Vorrichtung der in Figur 1 dargestellten Art Röntgenbilder der kardialen Gefäße gewonnen werden, kommt es darauf an, die feinen, dunklen Strukturen der Gefäße gegenüber dem Hintergrund (Knochen, Gewebe) verstärkt darzustellen. Ferner soll dabei möglichst der Störeinfluss von Eigenbewegungen des Patienten beziehungsweise des Herzens reduziert werden.

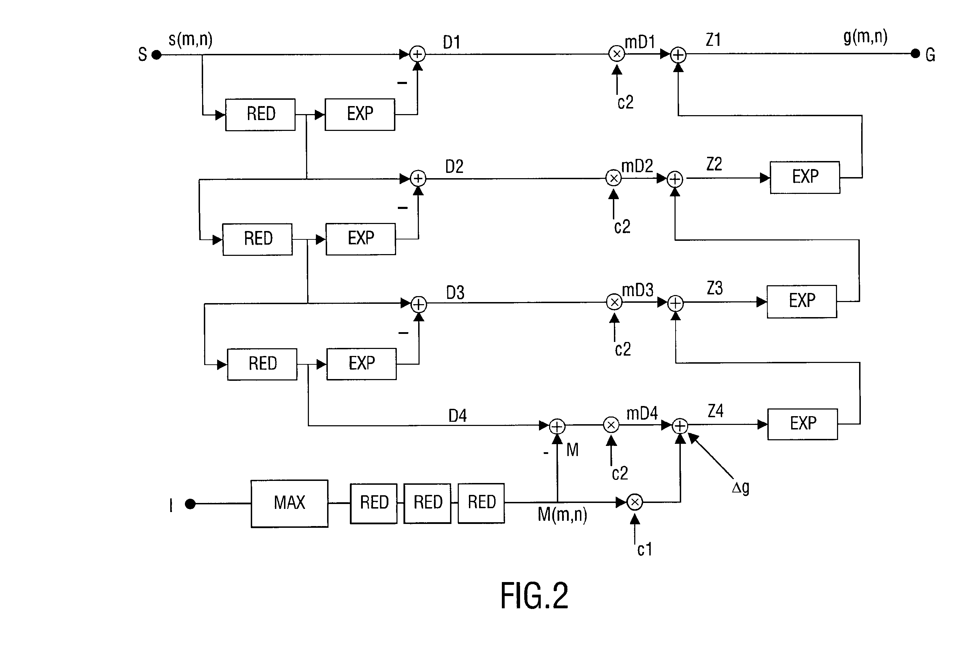

Wenn die Darstellung der Gefäße durch die Injektion eines Kontrastmittels verbessert wird, kann bei der Bildverarbeitung eine den "normalen" Hintergrund repräsentierende Maske vom gewonnenen Live-Bild abgezogen werden. Diese Maske wird dabei im einfachsten Falle vor der Injektion des Kontrastmittels durch separate Röntgenaufnahmen gewonnen. Wenn keine Bewegung zwischen der Aufnahme dieser Maske und den anschließenden Live-Aufnahmen auftreten würde, könnte mit Hilfe der Maske der Hintergrund perfekt vom Live-Bild abgezogen werden, woraufhin nurmehr die interessierenden Gefäße übrigblieben (T. M. Buzug, J. Weese, K. C. Strasters: Motion detection and motion compensation for digital subtraction angiography image enhancement; Philips Journal of Research, 51(2):203-229, 1998). Die zusätzliche Strahlenbelastung für die Gewinnung der Maske kann vermieden werden, indem die Maske während der Injektion des Kontrastmittels berechnet wird als das rekursive pixelweise Maximum aus der Folge der Live-Bilder, wodurch die Effekte des undurchlässigen, den Grauwert senkenden Kontrastmittels beseitigt werden (vgl. EP 0 200 262 B1). Bei diesen bekannten Verfahren führt jedoch die durch die Atmung oder den Herzschlag des Patienten erzeugte Bewegung zu einer Fehlüberdeckung zwischen der Maske und dem Hintergrund des Live-Bildes. Die Subtraktion der Maske von diesem Hintergrund führt daher nicht mehr zu einer perfekten Beseitigung des Hintergrundes, sondern kann sogar Bewegungsartefakte erzeugen. Zwar sind Algorithmen unter Verwendung einer Bewegungskompensation zur Offline-Korrektur kleiner Fehlüberdeckungen in cranialen oder abdominalen Bildern beschrieben worden, diese Algorithmen sind jedoch nur halbautomatisch und daher nicht geeignet für eine kardiale Bildverarbeitung in Echtzeit.
Gemäß der vorliegenden Erfindung erfolgt eine die Darstellung kardialer Gefäße verstärkende Bildverarbeitung unter Verwendung einer sogenannten Multiskalenzerlegung und Zusammensetzung des Bildes, welche nachfolgend mit Hilfe von Figur 2 beschrieben wird. Die dort gezeigte Multiskalenzerlegung und Zusammensetzung entspricht der sogenannten Laplaceschen Pyramide (P. J. Burt, E. H. Adelson: The Laplacian pyramid as a compact image code, IEEE Transactions on Communications, 31(4): 532-540,1983). Das ursprüngliche Digitalbild S mit den pixelweisen Grauwerten s(m, n), wobei m und n die Koordinaten der Zeile beziehungsweise Spalte des Bildes sind, wird in mehrere Detailbilder D1, D2, D3, D4 zerlegt, welche Bandpassinformation beziehungsweise Hochpassinformation repräsentieren. In Figur 2 ist dies für eine dreistufige Zerlegung dargestellt, wobei jedoch in der Praxis mehr Stufen verwendet werden. Die Detailbilder D1, D2, D3, D4 repräsentieren Strukturen verschiedener Größen, wobei D1 das feinste Detailbild der höchsten Auflösungsstufe ist. Das in der Figur unterste Detailbild D4, das auch als Restbild bezeichnet wird, repräsentiert eine verschmierte Tiefpassinformation. Um dieses verschmierte Bild zu erhalten, werden anstelle eines einzigen weit ausgedehnten Tiefpasskernes mehrere kleine Tiefpasskerne mit anschließender Auflösungsreduktion verwendet.

Im Einzelnen erfolgt die Multiskalenzerlegung wie folgt: Das ursprüngliche Bild S wird zunächst durch einen kleinen Tiefpass geringfügig verschmiert und anschließend in der Auflösung reduziert ("downsampled"), das heißt durch weniger Pixel repräsentiert. Typischerweise wird die Anzahl der Pixel um den Faktor 4 reduziert. Die informationsreduzierenden Operationen der Tiefpassfilterung und der Auflösungsreduktion werden in Figur 2 durch die mit RED bezeichneten Blöcke repräsentiert. Das hieraus gewonnene tiefpassgefilterte und auflösungsreduzierte Bild wird dann in dem mit EXP bezeichneten Block zunächst wieder in der Auflösung erhöht, das heißt auf die ursprüngliche Auflösung gebracht, und anschließend einem kleinen Tiefpass unterworfen, um durch die Auflösungserhöhung erzeugte Artefakte zu verschmieren. Durch die aufeinanderfolgend angewendeten Verarbeitungen RED und EXP wird ein geringfügig verschmiertes Bild erzeugt, welches dann vom Originalbild S abgezogen wird, um das erste Detailbild D1 zu erhalten. Dieses erste Detailbild D1 enthält somit nurmehr feine Hochpassinformationen, das heißt kleine Strukturen, welche als Bildkontrastwerte repräsentiert werden. Die Bildkontrastwerte stellen dabei näherungsweise die Abweichung der Pixelwerte vom mittleren Grauwert bei der entsprechenden Auflösungsstufe dar. Dunkle Strukturen vor hellem Hintergrund haben daher negative Bildkontrastwerte. Das Detailbild D1 kann anschließend noch zu einem modifizierten Detailbild mD1 umgewandelt werden, zum Beispiel durch Multiplikation aller Bildpunkte mit einem Gewichtungsfaktor c₂.

Das zweite Detailbild D2 und das dritte Detailbild D3 werden im Prinzip ähnlich wie das erste Detailbild D1 erzeugt, wobei als Ausgangspunkt jedoch nicht das Originalbild S dient, sondern das hinter dem Verarbeitungsblock RED der vorangehenden Stufe vorliegende Zwischenbild. Für das n-te Detailbild (zum Beispiel D3 für n = 3) ist dieses Zwischenbild das Produkt einer (n-1)-fachen Anwendung des Blockes RED, d.h. der Tiefpassfilterung und Auflösungsreduktion. Die Detailbilder D2, D3 können wiederum durch Multiplikation mit einer Konstanten c₂ in modifizierte Detailbilder mD2, mD3 umgewandelt werden.

Das unterste Detailbild D4 oder Restbild wird im Gegensatz zu den vorangegangenen Stufen ohne Subtraktion seiner mit RED und EXP verarbeiteten Kopie erzeugt. Das Detailbild D4 entspricht somit einer (N-1) = 3 -fachen sukzessiven Anwendung der Blöcke RED auf das Originalbild S. Die Bildpunkte des Restbildes stellen somit echte Grauwerte dar und nicht Bildkontrastwerte wie bei den anderen Detailbildern. Das Restbild hat daher einen anderen Charakter als die übrigen Detailbilder, wobei es jedoch im Folgenden zur Vereinheitlichung der Sprechweise ebenfalls als "Detailbild" bezeichnet werden soll.

Die Detailbilder D1 bis D4 beziehungsweise modifizierten Detailbilder mD1 bis mD4 werden, wie im rechten Teil von Figur 2 dargestellt ist, sukzessive wieder zu einem Gesamtbild G mit den Pixelwerten g (m, n) zusammengesetzt. Diese Zusammensetzung beginnt beim untersten Detailbild D4, welches im Rahmen der vorliegenden Erfindung mit den nachfolgend noch näher zu beschreibenden Maßnahmen zuvor in ein Zwischenbild Z4 umgewandelt wird. Das Zwischenbild Z4 wird über einen Verarbeitungsblock EXP zunächst in der Auflösung erhöht und anschließend tiefpassgefiltert, ähnlich wie es bereits im Zusammenhang mit der Zerlegung in Detailbilder beschrieben wurde. Die Summe des so gewonnenen Bildes und des modifizierten Detailbildes mD3 der nächst höheren Stufe ergibt das Zwischenbild Z3 der höheren Stufe. Dieses wird seinerseits durch einen Block EXP verarbeitet und zum modifizierten Detailbild mD2 der nächst höheren Stufe addiert, um das nächst höhere Zwischenbild Z2 zu ergeben, und so weiter. Am Ende erhält man schließlich das Zwischenbild Z1, welches dem gesuchten Gesamtbild G entspricht.

Während vorliegend speziell die sogenannte Laplacesche Pyramide beschrieben wurde, können im Rahmen der Erfindung ebenso andere Zerlegungstechniken wie wavelets oder Filterbänke verwendet werden.

Ein Zerlegungs- und Zusammensetzungsverfahren der oben erläuterten Art wird nun erfindungsgemäß abgeändert, um eine bessere Darstellung von Gefäßstrukturen zu erhalten.
Die grundlegende Idee des in Figur 2 dargestellten erfindungsgemäßen Verfahrens besteht dabei darin, eine mäßige Bewegung des Bildhintergrundes durch eine Maskensubtraktion vom Live-Bild zu berücksichtigen, die sich auf Strukturen mit einer räumlichen Ausdehnung beschränkt, welche größer ist als das Ausmaß der (erwarteten) Bewegung. Um alle feinen Strukturen zu entfernen, welche bei einer Bewegung Artefakte wie Doppelkonturen erzeugen, wird das Maskenbild durch einen linearen oder nichtlinearen Tiefpass verschmiert. Sodann wird die nunmehr verschmierte Maske vom Live-Bild subtrahiert. Bei der Erzeugung der Maske kann wie oben erläutert eine rekursive, pixelweise Maximalwertbildung zur Beseitigung von Einflüssen des Kontrastmittels beteiligt sein. Wie in Figur 2 dargestellt ist, lässt sich das beschriebene Vorgehen der Subtraktion einer verschmierten Maske besonders gut im Rahmen der Multiskalenzerlegung einbinden. Die Subtraktion kann dabei mit anderen Algorithmen zur Rauschreduktion oder zur Kontrastverstärkung kombiniert werden, ohne dass hierfür zusätzlicher Aufwand entsteht.

Zur Kombination der Maskensubtraktion mit der Multiskalenzerlegung wird entsprechend Figur 2 die Laplacesche Pyramide wie beschrieben auf das Live-Bild S angewendet. Das Detailbild D4 (Restbild) am unteren Ende der Pyramide repräsentiert somit große Strukturen des Live-Bildes durch Grauwerte. Das Ausmaß der Verschmierung des Bildes kann durch eine geeignete Wahl der Anzahl der Niveaus der Pyramide angepasst werden. Die Maske M mit den Pixelwerten M(m, n) wird wie oben erläutert durch die Berechnung des pixelweisen zeitlichen Maximums aus den Live-Bildern I bestimmt (in der Regel ist I = S). Diese Operation wird in Figur 2 durch den Block MAX repräsentiert. Anschließend wird das so gewonnene Bild so vielen Tiefpassfilterungen mit anschließender Auflösungsreduzierung, die gemeinsam durch den Block RED repräsentiert werden, unterworfen, wie die Zerlegungspyramide Ebenen hat. Dies stellt sicher, dass die Maske schließlich dieselbe Auflösungsstufe und Verschmiertheit hat wie das unterste Detailbild oder Restbild D4. Die so gewonnene Maske M wird vom Restbild D4 subtrahiert. Auf diese Weise wird erreicht, dass die Subtraktion der Maske nur noch verhältnismäßig grobe Strukturen betrifft, welche selbst bei einer Bewegung nicht zu störenden Artefakten führen.

Wie in Figur 2 ferner erkennbar ist, kann das Ausmaß der Maskensubtraktion kontrolliert werden durch eine erneute Hinzufügung eines durch die Größe des Faktors c₁ bestimmten Teiles der Maske M. Dieser Teil wird zum modifizierten Detailbild mD4 addiert, wobei letzteres aus dem Detailbild D4 durch Subtraktion der Maske M und anschließende Multiplikation mit dem Faktor c₂ erhalten wird. Die Helligkeit des Gesamtbildes kann schließlich durch Addition einer Konstante Δg geregelt werden (alle genannten Operationen an den Bildern sind immer pixelweise zu verstehen). Das auf diese Weise erhaltene Zwischenbild Z4 wird anschließend in der oben erläuterten Weise mit den übrigen Detailbildern D1 bis D3 zum Gesamtbild G zusammengesetzt.

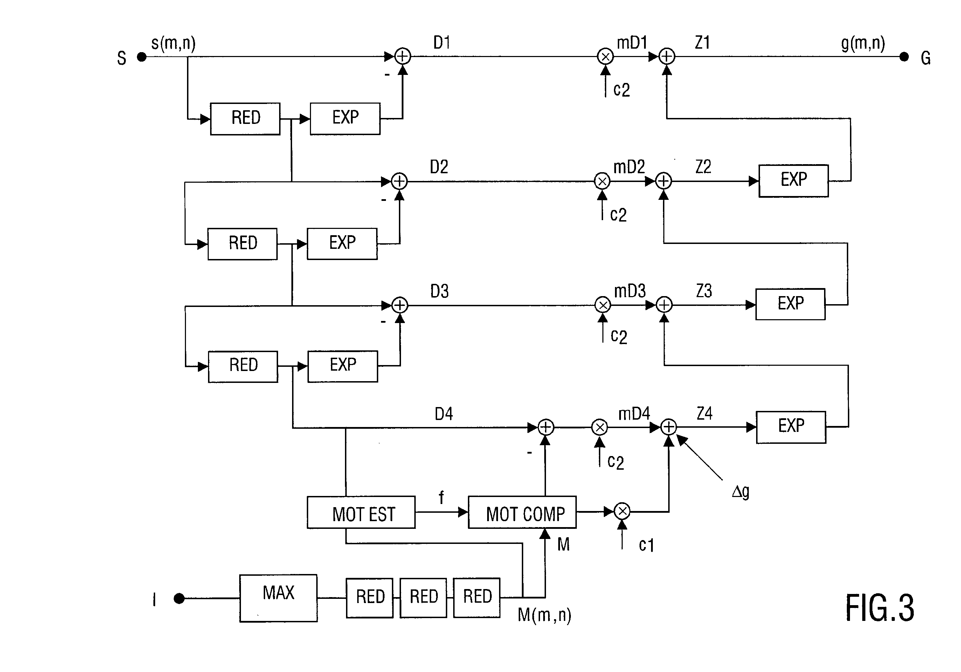

Figur 3 zeigt eine Erweiterung des in Figur 2 beschriebenen Verfahrens, wobei nurmehr die neu hinzugekommenen Komponenten erläutert werden sollen. Bei dem in Figur 3 dargestellten Verfahren wird eine teilweise Bewegungskompensation eingeführt. Eine Bewegungskompensation versucht durch Feststellung und Berücksichtigung der Bildhintergrundbewegung die Artefakte aufgrund einer Fehlüberdeckung zwischen der Maske und dem Live-Bild zu beseitigen beziehungsweise zu verringern. Die Bewegungsschätzung am Originalbild ist jedoch sehr schwierig und mit erheblichem Rechenaufwand verbunden, was den Einsatz dieser Verfahren häufig verbietet.

Derartige Probleme werden indes mit dem erfindungsgemäßen Verfahren vermieden. Dabei ist eine Bewegungsschätzung MOT EST zwischen das Restbild D4 der niedrigsten Auflösungsstufe und das (tiefpassgefilterte und auflösungsreduzierte) Maskenbild M geschaltet, um eine Relativbewegung festzustellen und ein entsprechendes vektorielles Bewegungsfeld f zu berechnen. Aufgrund des ermittelten Bewegungsfeldes f kann dann im Block MOT COMP eine Bewegungskompensation der Maske M erfolgen, so dass diese möglichst gut mit dem Restbild D4 zur Deckung gebracht wird, bevor sie hiervon subtrahiert wird. Der Vorteil des in Figur 3 dargestellten Einsatzes der Bewegungsschätzung und Bewegungskompensation liegt darin, dass diese nurmehr an den auflösungsreduzierten Bildern D4 beziehungsweise M vorgenommen werden muss. Diese Bilder sind erheblich kleiner als die Originalbilder S beziehungsweise I. Wenn das Originalbild zum Beispiel 1024 × 1024 Pixel enthält und eine Pyramide mit fünf Ebenen verwendet wird, bestehen die Maske und das Restbild nur noch aus 64 × 64 Pixeln. Die Anwendung der Bewegungsschätzung und Kompensation zwischen Bildern derartig tiefer Auflösungsstufe wird daher auch in Echtzeit möglich.

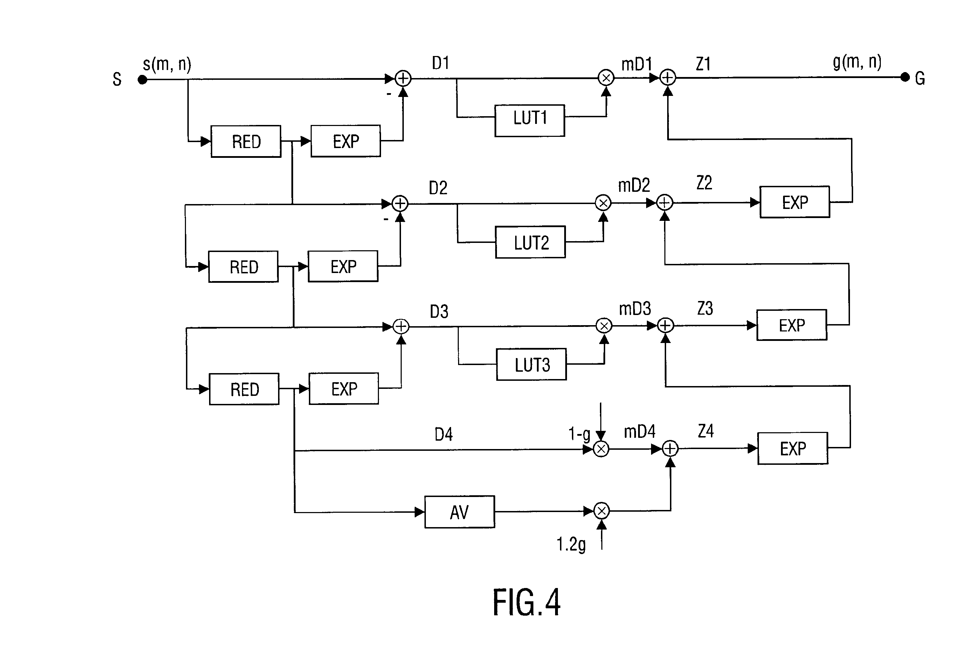

Figur 4 zeigt einen alternativen Ansatz zur Verstärkung der Gefäßdarstellung mit Hilfe einer Multiskalenzerlegung. Soweit das Schema von Figur 4 mit den Schemata der Figuren 2 und 3 übereinstimmt, wird auf die dortige Beschreibung verwiesen. Die Grundidee bei dem Ansatz gemäß Figur 4 besteht darin, mit Kontrastmittel gefüllte Gefäße in jedem Detailbild D1 bis D3 separat zu isolieren und zu verstärken, bevor die Detailbilder wieder zum Gesamtbild zusammengesetzt werden.

Bei Gefäßen handelt es sich um absorbierende (d.h. dunkle) Strukturen von mittlerer oder kleiner Größe. Im obersten Niveau der Zerlegungspyramide zeigen sich Gefäße als dunkle Strukturen geringen Durchmessers vor hellem Hintergrund. Die zu Gefäßen gehörigen Bildkontrastwerte haben daher ein negatives Vorzeichen (Differenz des Grauwertes zum Graumittelwert). Eine Verstärkung der Gefäße und Unterdrückung des Hintergrundes ist dann möglich, indem auf jeder Detailstufe D1 bis D3 mit Ausnahme der untersten Detailstufe des Restbildes D4 die Bildkontrastwerte mit einem negativen Vorzeichen verstärkt und/oder die Bildkontrastwerte mit einem positiven Vorzeichen geschwächt werden. Die zugehörigen Verstärkungsfunktionen sind vorzugsweise in Lookup-Tabellen LUT1, LUT2, LUT3 abgelegt.

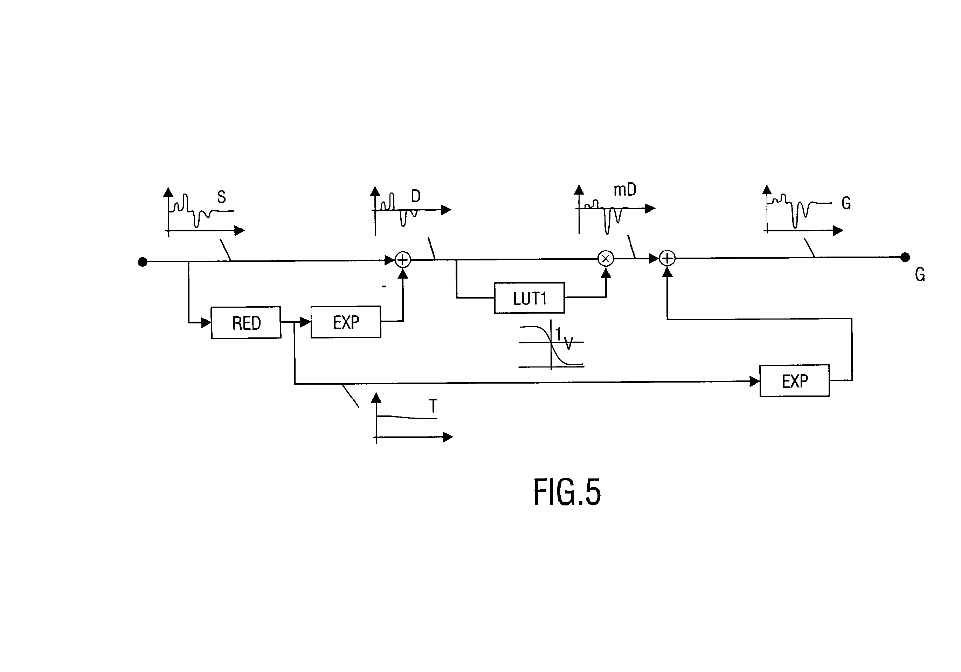

Die Auswirkung der erläuterten Verarbeitung sind in Figur 5 an einer vereinfachten, einstufigen Multiskalenzerlegung schematisch dargestellt. Das eindimensionale Originalbild S weist helle (Peaks nach oben) und dunkle (Peaks nach unten) Strukturen vor einem Hintergrund mittleren Grauwertes auf, wobei die dunklen Strukturen den darzustellenden Gefäßen entsprechen. Durch die Tiefpassfilterung und Auflösungsreduzierung RED wird aus dem Originalbild S das Tiefpassbild T erhalten, welches näherungsweise den mittleren Grauwert repräsentiert. Die Subtraktion dieses im Block EXP in der Auflösung wieder erhöhten und anschließend erneut tiefpassgefilterten Tiefpassbildes T vom Originalbild S liefert das Detailbild D. Dessen Bildpunktwerte stellen somit Kontraste dar, d.h. Differenzen der jeweiligen Grauwerte zum Graumittelwert, wobei die negativen Kontraste den Gefäßstrukturen entsprechen.

Sodann werden die Bildpunktwerte des Detailbildes D mit Hilfe der in der Lookup-Tabelle LUT1 abgelegten Verstärkungsfunktion V multipliziert. Da die Verstärkungsfunktion V für negative Kontraste größer als 1 und für positive Kontraste kleiner als 1 ist, sind im modifizierten Detailbild mD die negativen Kontraste (dunkel vor hellem Hintergrund) erhöht und die positiven (hell vor dunklem Hintergrund) abgeschwächt. Um nur bestimmte Strukturen zu verstärken, kann die Verstärkungsfunktion V für große negative Kontraste wieder geringer sein, was in Figur 5 nicht im Einzelnen dargestellt ist. Eine solche Verstärkungsfunktion V würde somit von minus Unendlich kommend zunächst kleiner als 1 sein, dann bei verhältnismäßig kleinen negativen Kontrasten x auf Werte > 1 ansteigen, um bei kleinen positiven Kontrasten wieder etwas und bei großen positiven Kontrasten noch mehr zurückzugehen. Die zugehörige Kennlinie f, die mit der Verstärkungsfunktion V gemäß y = f(x) = V(x)·x zusammenhängt, ist monoton wachsend und asymmetrisch.

Nach der Addition des in der Auflösung erhöhten und anschließend tiefpassgefilterten Tiefpassbildes T zum modifizierten Detailbild mD wird schließlich das gesuchte Gesamtbild G erhalten, in dem wie gewünscht die Gefäßstrukturen verstärkt sind.

Figur 6 zeigt zwei Beispiele für mögliche Verstärkungsfunktionen, wobei auf der horizontalen Achse der Bildkontrastwert x und auf der vertikalen Achse der Verstärkungsfaktor V aufgetragen ist. Funktion a) entspricht einer Verstärkungsfunktion mit geringfügiger Abschwächung grober Strukturen, während Funktion b) eine Verstärkungsfunktion mit starker Schwächung grober Strukturen darstellt.

Eine weitere Betonung feiner Strukturen kann gemäß Fig. 4 erzielt werden, indem das Restbild D4 der geringsten Auflösung mit einem Faktor (1-g) geschwächt wird (0 ≤ g ≤ 1).

Um einen Verlust in der Gesamthelligkeit des Bildes durch diese Schwächung zu vermeiden, wird der globale Mittelwert des Restbildes D4, der im Block AV berechnet wird und einen konstanten Wert hat, nach einer Verstärkung mit dem Faktor 1.2 g wieder zum abgeschwächten Detailbild hinzuaddiert.

Der in Figur 4 dargestellte Algorithmus geht ausschließlich von Einzelbildern aus, ohne eine zeitliche Information durch die Sequenz der Bilder zu berücksichtigen. Die Algorithmen gemäß den Figuren 2 und 3 basieren dagegen allein auf einer Maskensubtraktion zur Bildverbesserung, nicht jedoch auf einer kontrastabhängigen Verstärkung entsprechend Figur 4, welche die Gefäßinformation betont. Vorzugsweise werden daher die Verfahren gemäß den Figuren 2/3 sowie 4 miteinander kombiniert. Dies kann im einfachsten Falle durch Ersetzen der konstanten Verstärkungsfaktoren c₂ der Figuren 2 oder 3 durch die Verstärkungsfunktionen LUT1, LUT2 und LUT3 gemäß Figur 4 erfolgen. Falls gewünscht, kann der Effekt der Verstärkungsfaktoren c₂ in einfacher Weise in die Verstärkungsfunktionen integriert werden.

Weiterhin kann die Kombination der Maskensubtraktion und der Verstärkungsfunktionen bewegungsadaptiv gestaltet werden. Der Algorithmus gemäß Figur 4 ist von Bewegungen unabhängig, da er allein auf Einzelbildern beruht. Die Algorithmen gemäß den Figuren 2 und 3 können dagegen bei besonders starken Bewegungen versagen. Somit wird vorzugsweise das Ausmaß der vorhandenen Bewegung im Bild bestimmt, zum Beispiel durch Anwendung einer Bewegungsdetektion auf die Live-Bilder oder auf die tiefpassgefilterten Bilder der Multiskalenzerlegung gemäß Figur 3. Geeignete Algorithmen zur Bewegungsdetektion werden zum Beispiel bei Til Aach, Andre Kaup, Rudolf Mester: Statistical modelbased change detection in moving video (Signal Processing, 31(2):165-180, 1993) oder Til Aach, Andre Kaup: Bayesian algorithms for change detection in image sequences using Markov random fields (Signal Processing: Image Communication, 7(2): 147-160, 1995) beschrieben. Bei der bewegungskompensierten Maskensubtraktion gemäß Figur 3 kann das Ausmaß der Bewegung alternativ auch aus dem berechneten Bewegungsvektorfeld f zwischen der Maske und dem Restbild bestimmt werden. Die relativen Anteile des Maskensubtraktionsalgorithmus (Figuren 2 beziehungsweise 3) und des Verstärkungsfunktionenalgorithmus (Figur 4) können dann in Abhängigkeit von dem Ausmaß der gefundenen Bewegung gewichtet werden. Je mehr Bewegung festgestellt wird, um so mehr Gewicht sollte der Verstärkungsfunktionen-Algorithmus bekommen, und je weniger Bewegung festgestellt wird, desto mehr Gewicht sollte die Maskensubtraktion bekommen.

Mit den erfindungsgemäßen Verfahren wird somit eine verbesserte Darstellung von feinen Strukturen wie insbesondere kardialen Blutgefäßen bei gegebener Röntgenstrahlungsdosis und Kontrastmittelmenge erzielt. Alternativ kann auch bei gleichbleibender Gefäßdarstellung die Röntgendosis und/oder die Kontrastmittelmenge reduziert werden, um die Belastungen für den Patienten zu minimieren.

## Patentansprüche

1. Verfahren zur Bearbeitung von Digitalbildern, insbesondere von digitalisierten Röntgenbildern der kardialen Gefäße, wobei
- das Digitalbild in N (N = 1, 2,...) Detailbilder unterschiedlicher Ortsfrequenz und gegebenenfalls Bandbreite zerlegt wird;
- mindestens eines der Detailbilder derart modifiziert wird, dass kleine dunkle Strukturen verstärkt und/oder sonstige Strukturen geschwächt werden; und
- die Detailbilder nach ihrer Modifikation wieder zu einem Gesamtbild zusammengesetzt werden.

2. Verfahren nach Anspruch 1,
**dadurch gekennzeichnet,**
**dass** N-te Detailbild gröbster Auflösung durch Subtraktion einer Maske gleicher Auflösungsstufe modifiziert wird.

3. Verfahren nach Anspruch 2,
**dadurch gekennzeichnet,**
**dass** auf die Maske vor ihrer Subtraktion eine Bewegungsschätzung und eine Bewegungskompensation angewendet wird.

4. Verfahren nach Anspruch 2,
**dadurch gekennzeichnet,**
**dass** die Maske unter Bildung des pixelweisen zeitlichen Maximalwertes aus dynamisch gewonnenen Digitalbildern berechnet wird.

5. Verfahren nach Anspruch 2,
**dadurch gekennzeichnet,**
**dass** die Maske durch eine sukzessive mehrfache Tiefpassfilterung mit anschließender Auflösungsreduktion berechnet wird.

6. Verfahren nach Anspruch 1,
**dadurch gekennzeichnet,**
- **dass** das n-te Detailbild (n = 1, 2, ... N-1) erhalten wird durch Subtraktion
- des Zwischenbildes, das durch sukzessive n-fache Tiefpassfilterung mit anschließender Auflösungsreduzierung, eine die letzte Auflösungsreduzierung umkehrende Auflösungserhöhung sowie eine abschließende Tiefpassfilterung aus dem Originalbild gewonnen wurde,
- vom Zwischenbild, das durch sukzessive (n-1)-fache Tiefpassfilterung mit anschließender Auflösungsreduzierung aus dem Originalbild gewonnen wurde;
- **dass** das N-te Detailbild (Restbild) durch sukzessive (N-1)-fache Tiefpassfilterung mit anschließender Auflösungsreduzierung aus dem Originalbild gewonnen wurde; und
- **dass** das Zusammensetzen des Gesamtbildes sukzessive für n = N, ... 2 erfolgt durch Berechnung eines (n-1)-ten Zwischenbildes als Summe des (n-1)-ten modifizierten Detailbildes und des durch Auflösungserhöhung mit anschließender Tiefpassfilterung umgewandelten n-ten Zwischenbildes, wobei das N-te Zwischenbild dem modifizierten N-ten Detailbild und das erste Zwischenbild dem gesuchten Gesamtbild entspricht.

7. Verfahren nach Anspruch 6,
**dadurch gekennzeichnet,**
**dass** das n-te Detailbild (n = 1, ..., N-1) modifiziert wird durch Anwendung einer asymmetrischen Verstärkungsfunktion, welche in einem negativen Intervall [-b,-a] (b > a ≥ 0) größer als in dem korrespondierenden positiven Intervall [a,b] ist, wobei die Verstärkungsfunktion weiterhin vorzugsweise monoton abnehmend, nichtlinear und für negative Bildpunktwerte größer als 1 ist.

8. Verfahren nach Anspruch 2 und 7,
wobei je nach festgestellter Bewegung des Gegenstandes des Digitalbildes die relative Gewichtung der Modifikationen nach Anspruch 2 beziehungsweise nach Anspruch 7 verändert wird.

9. Verfahren nach Anspruch 8,
**dadurch gekennzeichnet,**
**dass** die Bewegung festgestellt wird durch Detektion von Änderungen zwischen der Maske und dem N-ten Detailbild gröbster Auflösung.

10. Verfahren nach Anspruch 7,
**dadurch gekennzeichnet,**
**dass** die Differenz zwischen einem zeitlich späteren und einem zeitlich früheren Digitalbild gebildet wird, und dass an den Stellen, an denen das Differenzbild die Bewegung einer dunklen Struktur vor hellem Hintergrund anzeigt, die Verstärkungsfunktion gespreizt wird.

11. Vorrichtung zur Bildverarbeitung von Röntgenbildern, enthaltend einen Röntgendetektor zur Erzeugung von digitalen Röntgenbildern sowie eine Datenverarbeitungseinheit, welche so eingerichtet ist, dass sie ein Verfahren nach mindestens einem der Ansprüche 1 bis 10 ausführen kann.
